# EUROPÄISCHE PATENTANMELDUNG

(11) **EP 4 692 568 A1**
(43) Veröffentlichungstag der Anmeldung: **11.02.2026**
(21) Anmeldenummer: 25191580.7
(22) Anmeldetag: 24.07.2025
(51) Int. Cl.: F16B 2/24, E04B 1/58, F16B 21/06, F16B 21/08, F16B 7/04

(54) **BAUGRUPPE**

(30) Priorität: 06.08.2024 DE 202024104432 U
(71) Anmelder: Schilling GmbH, 26629 Großefehn (DE)
(72) Erfinder: SCHMIDT, Ralf, 26629 Großefehn (DE)
(74) Vertreter: Jabbusch, Matthias

(57) **Zusammenfassung**

In einer ein Konstruktionsprofil sowie eine Parallelverbindung (3) aufweisenden Baugruppe hat das Konstruktionsprofil eine hinterschnittene Längsnut (12) und die Parallelverbindung (3) in der Längsnut (12) des Konstruktionsprofils festsetzbare Verankerungsstrukturen. Dabei sind die Verankerungsstrukturen elastisch verformbare Bereiche, mit denen die Parallelverbindung (3) und aus dem Konstruktionsprofil abgelängte Konstruktionsprofilzuschnitte (12, 13) in Schnappverbindungen zusammenwirken. Die Parallelverbindung (3) ist als Spreizfederanordnung ausgeführt, deren in Paaren angeordnete Federschenkel (4, 5; 6, 7) an ihren freien Enden ausgebildete Rastnasen (8, 9, 10, 11) aufweisen.

## Beschreibung

Die Erfindung betrifft eine Baugruppe mit wenigstens einem Konstruktionsprofil, welches wenigstens eine hinterschnittene Längsnut aufweist, und mit wenigstens einer Parallelverbindung, die in der Längsnut des Konstruktionsprofils festsetzbare Verankerungsstrukturen aufweist.

In bekannten Baugruppen wird das Konstruktionsprofil zu Stangenmaterial abgelängt, welches mittels verschiedenartiger Verbindungsteile zu Tragkonstruktionen für Gewächshäuser, Wintergärten, Terrassenüberdachungen, Vordächern, oder Carports miteinander verbunden werden. In Parallelverbindungen wirkende Verbindungsteile dienen dabei dem längsseitigen Verbinden einzelner Profilstangen miteinander. In ihrer einfachsten Form weisen solche Parallelverbindungen Schrauben und in die zu verbindenden Profilstangen eingebrachte Bohrlöcher zur Aufnahme der Schraubenschäfte auf. Derart ausgebildete Parallelverbindungen weisen in Reihen angeordnete Verbindungspunkte auf, mit deren Verschraubungslöchern Schutzschichten beschädigt und materialschwächende Lastknoten geschaffen sind.

Der Erfindung liegt deshalb die Aufgabe zugrunde, eine Baugruppe der eingangs genannten Gattung aufzuzeigen, mit der längsseitig zwischen Konstruktionsprofilzuschnitten hergestellte Parallelverbindungen besonders dauerhaft und belastbar ausgeführt sind.

Diese Aufgabe ist erfindungsgemäß durch eine Baugruppe mit den Merkmalen des Patentanspruches 1 gelöst. Vorteilhafte Weiterbildungen der Erfindung sind in den Unteransprüchen angegeben.

Die erfindungsgemäße Baugruppe zeichnet sich dadurch aus, dass die Verankerungsstrukturen elastisch verformbare Bereiche sind, mit denen die Parallelverbindung und aus dem Konstruktionsprofil abgelängte Konstruktionsprofilzuschnitte in Schnappverbindungen formschlüssig zusammenwirken. Während Schraubverbindungen über die Länge miteinander zu verbindender Konstruktionsprofilzuschnitte lediglich in vorbestimmten Abständen zueinander gesetzte Punktverbindungen sein können, ermöglichen Schnappverbindungen vorteilhaft einen Formschluss über die gesamte Länge der miteinander zu verbindenden Konstruktionsprofilzuschnitte. Zudem bedarf es zur Herstellung von Schnappverbindungen keiner das Konstruktionsprofil durchdringender Bohrlöcher, so dass vor Korrosion schützende Beschichtungen unverletzt und die vollen Profilquerschnitte über die gesamte Länge der miteinander verbundenen Konstruktionsprofilabschnitte erhalten bleiben. Folglich ermöglichen die Schnappverbindungen besonders dauerhafte und belastbare Parallelverbindungen zwischen längsseitig nebeneinander angeordneten Konstruktionsprofilabschnitten.

Nach einer ersten Weiterbildung der Erfindung ist auch die Parallelverbindung als Konstruktionsprofil ausgeführt. Konstruktionsprofile, die auch Hohlkammerprofile, Montageprofile oder Nutenprofile genannt werden, sind im Strangpressverfahren hergestellte Halbzeuge, die vorzugsweise aus Aluminium oder Kunststoffen hergestellt sind. Dabei ermöglicht das Strangpressverfahren eine vorteilhaft kostengünstige Herstellung des Konstruktionsprofils, auch wenn dieses eine komplexe Profilgeometrie aufweist. Vorzugsweise ist das Konstruktionsprofil jedoch aus einer Aluminiumlegierung ausgebildet, mit deren Legierungsbestandteilen das Elastizitätsmodul vorteilhaft vergrößert ist. Das vergrößerte Elastizitätsmodul verbessert die elastische Verformbarkeit der Verankerungsstrukturen und ermöglichst so die Ausbildung besonders sicherer Schnappverbindungen mit verbessertem Formschluss.

In einer nächsten Weiterbildung der Erfindung ist die Parallelverbindung als Spreizfederanordnung ausgeführt, deren in Paaren angeordnete Federschenkel an ihren freien Enden ausgebildete Rastnasen aufweisen. Dabei ist die in Richtung des Federweges ausgebildete Länge der Rastnasen kleiner ausgebildet als der maximale Federweg. Insbesondere bei einer Ausbildung der Parallelverbindung als Aluminium-Konstruktionsprofil weisen von den Rastnasen maximal zurücklegbare Federwege bei üblichen Konstruktionsprofilgrößen eine Länge von unter einem Millimeter auf. Grundsätzlich ist die konstruktive Auslegung der Schnappverbindung, insbesondere die der Rastnasen, an die Länge der jeweils geplanten Schnappverbindungen anzupassen, damit das Aufbringen von Fügekräften zur Überwindung der an Spreizfederanordnungen wirkenden Federkräfte auch noch an den Baustellen zu realisieren ist, an denen keine schweren Pressen zur Verfügung stehen.

Nach einer anderen vorteilhaften Weiterbildung der Erfindung weist die hinterschnittene Längsnut wenigstens zwei Hinterschneidungen zur formschlüssigen Aufnahme der Schraubenköpfe und Muttern genormter Verschraubungen auf. Dazu ist die Längsnut vorzugsweise als T-Nut ausgebildet, deren Hinterschneidungen für die verdrehsichere Aufnahme von Vierkant-, Sechskant- und Hammerköpfen besonders geeignet sind.

Nach einer nächsten Weiterbildung der Erfindung weist die hinterschnittene Längsnut wenigstens zwei Hinterschneidungen zur formschlüssigen Aufnahme der an den Federschenkeln ausgebildeten Rastnasen auf. Dabei sind die Hinterschneidungen im einfachsten Fall die eine T-Nut kennzeichnenden Hinterschneidungen, sie können jedoch auch in einer eine solche T-Nut beliebig erweiternden Vertiefung ausgebildet sein, beispielsweise in Form einer inneren T-Nut, deren Nuteingang am Nutgrund einer äußeren T-Nut verläuft. Dabei können die innere und die äußere T-Nut anwendungsbezogen auch erheblich voneinander abweichende Geometrien aufweisen.

Um zu verhindern, dass sich Schnappverbindungen bei Überlastung wieder lösen, kann die als Spreizfederanordnung ausgeführte Parallelverbindung ein Gesperre aufweisen, welches zwischen den Federschenkeln eines jeden Federschenkelpaares ausgebildet ist. Ein solches Gesperre blockiert das Einfedern der Federschenkel vollständig, so dass sogar auf die mit einer Schnappverbindung zusammengehaltenen Konstruktionsprofilzuschnitte wirkende Schlag- und Torsionsbeanspruchungen nicht dazu führen können, dass die Schnappverbindung auseinanderspringt.

In einem Ausführungsbeispiel der Erfindung wird vorgeschlagen, dass jedes Gesperre wenigstens eine innenseitig zwischen den beiden Federschenkeln ausgebildete Falle sowie wenigstens einen in Profillängsrichtung formschlüssig in die Falle einschiebbaren Verriegelungsstab aufweist. Im Falle der Ausbildung der Parallelverbindung als Konstruktionsprofil besteht die Falle aus zwei an den Federschenkeln innenseitig verlaufenden Rillen, mit denen vorzugsweise ein hohlzylindrischer Raum zur formschlüssigen Aufnahme des Verriegelungsstabes begrenzt ist.

Um die Belastbarkeit der in der erfindungsgemäßen Baugruppe hergestellten Schnappverbindungen weiter zu verbessern, weist die Parallelverbindung wenigstens einen zwischen ihren Federschenkelpaaren ausgebildeten Passungsbereich auf, dessen Passmaß der Öffnungsbreite der hinterschnittenen Längsnut entspricht. Mit einem solchen Passungsbereich ist insbesondere verhindert, dass Querkräfte, die auf die über Schnappverbindungen zusammengehaltenen Konstruktionsprofilzuschnitte einwirken, nicht zu Verschiebungen zwischen den Konstruktionsprofilabschnitten und damit zum Verkanten der Spreizfederanordnung in den hinterschnittenen Längsnuten führen können.

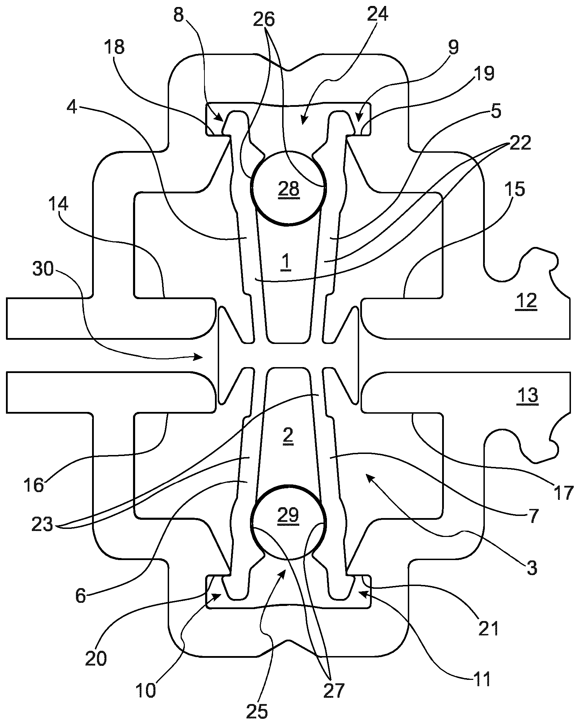

Ein Ausführungsbeispiel der Erfindung, aus dem sich weitere erfinderische Merkmale ergeben, ist in der Zeichnung dargestellt.

Die einzige Figur zeigt eine vergrößerte Detailansicht der erfindungsgemäßen Baugruppe im Profilschnitt. Die Baugruppe besteht aus einem in der Figur nur ausschnittsweise dargestellten Konstruktionsprofil, welches eine hinterschnittene Längsnut 1, 2 aufweist. Außerdem besteht die Baugruppe aus einer Parallelverbindung 3, der in der Längsnut 1, 2 des Konstruktionsprofils festsetzbare Verankerungsstrukturen aufweist. Die Parallelverbindung 3 ist als Spreizfederanordnung ausgeführt, deren Verankerungsstrukturen in Paaren angeordnete Federschenkel 4, 5, 6, 7 sind, die an ihren freien Enden ausgebildete Rastnasen 8, 9, 10, 11 aufweisen. Mit diesen Rastnasen 8, 9, 10, 11 wirkt die Parallelverbindung 3 und zwei aus dem Konstruktionsprofil abgelängte Konstruktionsprofilabschnitte 12, 13 in einer Schnappverbindung zusammen, deren konstruktive Ausbildung den in der vergrößerten Detailansicht dargestellten Bereich umfasst. Die hinterschnittenen Längsnuten 1, 2 der beiden Konstruktionsprofilzuschnitte 12, 13 weisen jeweils zwei Hinterschneidungen 14, 15 bzw. 16, 17 auf, die der formschlüssigen Aufnahme von Muttern und Schraubenköpfen genormter Verschraubungsteile dienen. Außerdem weisen die hinterschnittenen Längsnuten 1, 2 der beiden Konstruktionsprofilzuschnitte 12, 13 jeweils zwei Hinterschneidungen 18, 19 bzw. 20, 21 auf, mit denen die an den Federschenkeln 4, 5, 6, 7 ausgebildeten Rastnasen 8, 9, 10, 11 formschlüssig in Eingriff stehen. Die als Spreizfederanordnung ausgeführte Parallelverbindung 3 weist zwischen den Federschenkeln 4, 5, 6, 7 eines jeden Federschenkelpaares 22, 23 ausgebildete Gesperre 24, 25 auf. Jedes Gesperre 24, 25 weist eine innenseitig zwischen seinen beiden Federschenkeln 4, 5 bzw. 6, 7 ausgebildete Falle 26, 27 sowie jeweils einen in Profillängsrichtung formschlüssig in die Falle 26 bzw. 27 einschiebbaren Verriegelungsstab 28, 29 auf. Außerdem weist die Parallelverbindung 3 wenigstens einen zwischen seinen Federschenkelpaaren 22, 23 ausgebildeten Passungsbereich 30 auf, dessen Passmaß der Öffnungsbreite der hinterschnittenen Längsnuten 1, 2 entspricht.

## Patentansprüche

1. Baugruppe mit wenigstens einem Konstruktionsprofil, welches wenigstens eine hinterschnittene Längsnut aufweist, und mit wenigstens einer Parallelverbindung, die in der Längsnut des Konstruktionsprofils festsetzbare Verankerungsstrukturen aufweist,
**dadurch gekennzeichnet,**
**dass** die Verankerungsstrukturen elastisch verformbare Bereiche sind, mit denen die Parallelverbindung (3) und aus dem Konstruktionsprofil abgelängte Konstruktionsprofilzuschnitte (12, 13) in Schnappverbindungen zusammenwirken.

2. Baugruppe nach Anspruch 1, **dadurch gekennzeichnet, dass** auch die Parallelverbindung (3) als Konstruktionsprofil ausgeführt ist.

3. Baugruppe nach Anspruch 1 oder 2, **dadurch gekennzeichnet, dass** die Parallelverbindung (3) als Spreizfederanordnung ausgeführt ist, deren in Paaren angeordnete Federschenkel (4, 5; 6, 7) an ihren freien Enden ausgebildete Rastnasen (8, 9, 10, 11) aufweisen.

4. Baugruppe nach einem der Ansprüche 1 bis 3, **dadurch gekennzeichnet, dass** die hinterschnittene Längsnut (1, 2) wenigstens zwei Hinterschneidungen (14, 15; 16, 17) zur formschlüssigen Aufnahme der Schraubenköpfe und Muttern genormter Verschraubungen aufweist.

5. Baugruppe nach Anspruch 3 oder 4, **dadurch gekennzeichnet, dass** die hinterschnittene Längsnut (1, 2) wenigstens zwei Hinterschneidungen (18, 19; 20, 21) zur formschlüssigen Aufnahme der an den Federschenkeln (4, 5; 6, 7) ausgebildeten Rastnasen (8, 9; 10, 11) aufweist.

6. Baugruppe nach einem der Ansprüche 3 bis 5, **dadurch gekennzeichnet, dass** die als Spreizfederanordnung ausgeführte Parallelverbindung (3) zwischen den Federschenkeln (4, 5; 6, 7) eines jeden Federschenkelpaares (22, 23) ausgebildete Gesperre (24, 25) aufweist.

7. Baugruppe Anspruch 6, **dadurch gekennzeichnet, dass** jedes Gesperre (24, 25) wenigstens eine innenseitig zwischen den beiden Federschenkeln (4, 5; 6, 7) ausgebildete Falle (26, 27) sowie wenigstens einen in Profillängsrichtung formschlüssig in die Falle (26, 27) einschiebbaren Verriegelungsstab (28, 29) aufweist.

8. Baugruppe nach einem der Ansprüche 1 bis 7, **dadurch gekennzeichnet, dass** die Parallelverbindung (3) wenigstens einen zwischen seinen Federschenkelpaaren (22, 23) ausgebildeten Passungsbereich (30) aufweist, dessen Passmaß der Öffnungsbreite der hinterschnittenen Längsnut (1, 2) entspricht.
